# EUROPEAN PATENT APPLICATION

(11) **EP 4 618 258 A1**
(43) Date of publication of application: **17.09.2025**
(21) Application number: 23890658.0
(22) Date of filing: 07.11.2023
(51) Int. Cl.: H01M 50/102, H01M 50/103, H01M 50/519, H01M 10/04

(54) **BATTERY AND ELECTRICAL DEVICE**

(30) Priority: 16.11.2022 CN 202211438276
(71) Applicant: Ningde Amperex Technology Ltd., Ningde City, Fujian Province 352100 (CN); Dongguan NVT Technology Limited, Donguan, Guangdong 523443 (CN)
(72) Inventor: ZHANG, Guowen, Ningde City, Fujian Province 35200 (CN)
(74) Representative: Icosa
(86) International application number: PCT/CN2023/130129
(87) International publication number: WO 2024/104222

(57) **Abstract**

A battery is disclosed. The battery includes an electrode assembly, a housing, a first electrical connecting piece, and a circuit board assembly. The electrode assembly is accommodated in the housing. The housing includes a first recessed portion that is recessed toward the electrode assembly. The first electrical connecting piece and the first recessed portion are electrically connected to the electrode assembly separately. The circuit board assembly includes a base board, a first conductive piece, a second conductive piece, and a third conductive piece. The base board is disposed in the first recessed portion. The first conductive piece is electrically connected to the base board, and at least a part of the first conductive piece extends beyond the first recessed portion. The second conductive piece is electrically connected between the first conductive piece and the first electrical connecting piece. The third conductive piece is electrically connected between the first conductive piece and the first recessed portion. This application further provides an electrical device containing the battery. **In** the battery and electrical device, the first recessed portion forms a space for accommodating the base board on an outer side of the housing, thereby reducing space occupation caused when the housing and the base board are disposed opposite to each other, reducing space occupation caused when the first electrical connecting piece and the base board are overlap-connected, reducing space waste of the battery comprehensively, and improving the energy density of the battery.

## Description

### TECHNICAL FIELD

This application relates to the technical field of energy storage, and in particular, to a battery and an electrical device.

### BACKGROUND

In an existing battery structure, a protection circuit board is generally disposed on a side of a housing of a battery cell, the side on which an electrode post is disposed. Because the electrode post protrudes outward, the spacing between the housing and the protection circuit board is relatively large, thereby leading to a waste of space in the battery, and reducing the energy density of the battery.

### SUMMARY

In view of the above situation, it is necessary to provide a battery to reduce space waste of the battery and increase energy density of the battery.

An embodiment of this application provides a battery. The battery includes an electrode assembly, a housing, a first electrical connecting piece, and a circuit board assembly. The electrode assembly is accommodated in the housing. The housing includes a first recessed portion that is recessed toward the electrode assembly. The first electrical connecting piece and the first recessed portion are electrically connected to the electrode assembly separately. The circuit board assembly includes a base board, a first conductive piece, a second conductive piece, and a third conductive piece. The base board is disposed in the first recessed portion. The first conductive piece is electrically connected to the base board, and at least a part of the first conductive piece extends beyond the first recessed portion. The second conductive piece is electrically connected to the first conductive piece and the first electrical connecting piece. The third conductive piece is electrically connected to the first conductive piece and the first recessed portion.

In the above battery, the first recessed portion forms a space for accommodating the base board on the outer side of the housing, thereby reducing space occupation caused when the housing and the base board are disposed opposite to each other. Moreover, the base board is connected to the first electrical connecting piece by the first conductive piece and the second conductive piece, thereby reducing the space occupation caused by overlap-connection between the first electrical connecting piece and the base board. Such arrangement reduces the space waste of the battery comprehensively, and increases the energy density of the battery.

In some embodiments of this application, the housing includes a first sidewall. The first recessed portion is formed on the first sidewall. A side oriented back from the electrode assembly, of the first sidewall, includes a first surface and a second surface. The second surface coincides with a bottom wall of the first recessed portion. The first surface is parallel to the second surface. The first electrical connecting piece is connected to the first surface.

In some embodiments of this application, along a direction perpendicular to the first surface, a spacing L between the first surface and the second surface satisfies 0.1 mm ≤ L ≤ 3 mm. In this way, the depth of the first recessed portion fits the shape of the base board, thereby reducing the space occupied by the base board, and increasing the energy density of the battery.

In some embodiments of this application, the spacing L satisfies 0.5 mm ≤ L ≤ 1.5 mm. In this way, the depth of the first recessed portion fits the shape of the base board to a higher degree, thereby reducing the space occupied by the base board, and increasing the energy density of the battery.

In some embodiments of this application, the side oriented back from the electrode assembly, of the first sidewall, further includes a third surface. The third surface is disposed between the first surface and the second surface. A corner between the third surface and the first surface is transitioned smoothly, and/or, a corner between the third surface and the second surface is transitioned smoothly, so as to reduce the risk of scratching the base board or the first conductive piece at the corner and facilitate the manufacture and formation of the first sidewall.

In some embodiments of this application, the first conductive piece includes a first connecting portion and a second connecting portion connected in sequence. The first connecting portion is connected to a side of the base board, the side being oriented toward the second surface. The first connecting portion is disposed apart from the second surface. The second connecting portion extends beyond the first recessed portion from the first connecting portion. The second conductive piece includes a first extension portion, a second extension portion, and a third extension portion connected in sequence. The first extension portion is connected to a side of the first connecting portion, the side being oriented toward the second surface. The first extension portion is disposed opposite to the second surface. The second extension portion extends along a direction that fits the third surface. The third extension portion is disposed opposite to the first surface and electrically connected to the first electrical connecting piece. The third conductive piece is connected between the first connecting portion and the second surface. Through the first extension portion, the second extension portion, and the third extension portion that are connected sequentially, the second conductive piece can be disposed apart and insulated from the housing and reduce the space occupied by the second conductive piece, thereby increasing the energy density of the battery.

In some embodiments of this application, the housing further includes a second sidewall. The second sidewall and the first sidewall are disposed opposite to each other along a first direction. The housing further includes two third sidewalls disposed opposite to each other along a second direction and two fourth sidewalls disposed opposite to each other along a third direction. The first sidewall, the second sidewall, the third sidewall, and the fourth sidewall close in to form a space for accommodating the electrode assembly. The first direction, the second direction, and the third direction are perpendicular to each other.

In some embodiments of this application, along the first direction, a projection of the base board lies within a projection of the second surface. Along the third direction, the projection of the base board lies within a projection of the third surface. In this way, the base board is disposed in the first recessed portion, thereby reducing the space occupied by the base board and increasing the energy density of the battery.

In some embodiments of this application, viewed along the first direction, the first surface and the second surface are arranged sequentially in the third direction so that the first sidewall and the first recessed portion form a stepped structure. Correspondingly, the first surface and the second surface are two step surfaces of the stepped structure.

In some embodiments of this application, viewed along the first direction, the first surface includes a first region and a second region spaced apart in the third direction. The second surface is disposed between the first region and the second region so that the first sidewall and the first recessed portion form a U-shaped concave structure. When the battery is dropped and impacted, the first region and the second region located on two sides of the base board respectively in the third direction can be impacted before the base board, so as to cushion the impact force on the base board and reduce the risk of directly impacting and damaging the base board.

In some embodiments of this application, viewed along the second direction, the third sidewall includes a first edge toward the first sidewall. The first edge is flush with the first surface. The third sidewall includes a third region protruding beyond the second surface. Along the second direction, a projection of the base board lies within the third region. When the battery is dropped and impacted, the third regions located on two sides of the base board in the second direction can be impacted before the base board, so as to cushion the impact force on the base board and reduce the risk of directly impacting and damaging the base board.

In some embodiments of this application, the battery further includes a protection piece. The protection piece overlays the base board and at least a part of the first conductive piece to further protect the base board. The protection piece is further connected to the third region, the second surface, and the third surface to increase the strength of connection between the protection piece and the first recessed portion, and reduce the risk of detachment between the protection piece and the first recessed portion in a case of dropping and impacting the battery, thereby further protecting the base board.

In some embodiments of this application, the first electrical connecting piece includes an electrode post and an insulator. The electrode post includes a body portion and a first abutment portion connected to one end of the body portion. Along an axial direction of the body portion, a projection of the body portion lies within a projection of the first abutment portion. A connecting hole is created on the housing. The body portion passes through the connecting hole. A gap exists between a wall of the connecting hole and the body portion. The insulator is bonded between the housing and the first abutment portion. First, the insulator increases the strength of connection between the electrode post and the housing and implements insulation between the first abutment portion and the housing. Second, the insulator can seal the connecting hole to reduce the risk of electrolyte leakage in the housing. Third, the insulator is bonded between the housing and the first abutment portion to simplify the structure of connection between the electrode post and the housing and reduce the amount of dimension by which the electrode post protrudes beyond the housing, thereby increasing the energy density of the battery.

In some embodiments of this application, the first abutment portion and the insulator are located on a side of the housing, the side being oriented back from the electrode assembly; or, the first abutment portion and the insulator are located on a side of the housing, the side being oriented toward the electrode assembly.

In some embodiments of this application, the electrode post further includes a second abutment portion. The second abutment portion is connected to an end of the body portion, the end being away from the first abutment portion. Along an axial direction of the body portion, a projection of the body portion lies within a projection of the second abutment portion. The first abutment portion and the second abutment portion exert a grip on the two sides of the housing, thereby improving the strength of connection between the electrode post and the housing. The insulator includes a first part, a second part, and a third part. The first part is bonded between the housing and the first abutment portion. The second part is bonded between the housing and the second abutment portion. The third part serves as a filler between the body portion and the housing, so as to implement insulation between the first abutment portion and the housing and seal the connecting hole, and in turn, reduce the risk of electrolyte leakage in the housing.

In some embodiments of this application, a side oriented toward the first recessed portion, of the electrode assembly, is a flat face; and the side oriented toward the first recessed portion, of the electrode assembly, is disposed apart from a side oriented toward the electrode assembly, of the first recessed portion. Along the first direction, the spacing between the electrode assembly and the first electrical connecting piece is greater than the spacing between the electrode assembly and the first recessed portion. In this way, it is convenient to mount a relatively large first tab between the electrode assembly and the first electrical connecting piece, and mount a relatively small second tab between the electrode assembly and the first electrical connecting piece, thereby increasing the space utilization rate of the housing and the energy density of the battery.

In some embodiments of this application, the electrode assembly is formed by stacking or winding a positive electrode plate, a separator, and a negative electrode plate disposed in sequence.

An embodiment of this application further provides a battery. The battery includes an electrode assembly, a housing, a first electrical connecting piece, a second electrical connecting piece, and a circuit board assembly. The electrode assembly is accommodated in the housing.

The housing includes a first recessed portion that is recessed toward the electrode assembly. The first electrical connecting piece and the second electrical connecting piece are electrically connected to the electrode assembly separately.

The circuit board assembly includes a base board, a first conductive piece, a second conductive piece, and a third conductive piece. The base board is disposed in the first recessed portion. The first conductive piece is electrically connected to the base board, and at least a part of the first conductive piece extends beyond the first recessed portion. The second conductive piece is electrically connected between the first conductive piece and the first electrical connecting piece. The third conductive piece is electrically connected between the first conductive piece and the second electrical connecting piece.

In the above battery, the first recessed portion forms a space for accommodating the base board on the outer side of the housing, thereby reducing space occupation caused when the housing and the base board are disposed opposite to each other. The second electrical connecting piece is connected in the first recessed portion to reduce the space occupied by the second electrical connecting piece. The base board is connected to the first electrical connecting piece by the first conductive piece and the second conductive piece, thereby reducing the space occupation caused by overlap-connection between the first electrical connecting piece and the base board. The base board is connected to the second electrical connecting piece by the first conductive piece and the third conductive piece, thereby reducing the space occupation caused by overlap-connection between the second electrical connecting piece and the base board. Such arrangement reduces the space waste of the battery comprehensively, and increases the energy density of the battery.

An embodiment of this application further provides an electrical device. The electrical device includes an electrical body and the battery according to any one of the embodiments described above. The battery is electrically connected to the electrical body.

In the battery and electrical device of this application, the first recessed portion forms a space for accommodating the base board on the outer side of the housing, thereby reducing space occupation caused when the housing and the base board are disposed opposite to each other. Moreover, the base board is connected to the first electrical connecting piece by the first conductive piece and the second conductive piece, thereby reducing the space occupation caused by overlap-connection between the first electrical connecting piece and the base board. Such arrangement reduces the space waste of the battery comprehensively, and increases the energy density of the battery.

### BRIEF DESCRIPTION OF DRAWINGS

FIG. 1 is a schematic structural diagram of a battery according to an embodiment of this application;
FIG. 2 is a first schematic structural exploded view of a battery according to an embodiment of this application;
FIG. 3 is a side view of a battery viewed along a second direction according to an embodiment of this application;
FIG. 4 is a side view of a battery viewed along a first direction according to an embodiment of this application;
FIG. 5 is a schematic structural diagram of a first region and a second region in a battery according to an embodiment of this application;
FIG. 6 is a schematic structural diagram of a first edge in a battery according to an embodiment of this application;
FIG. 7 is a schematic structural diagram of a third region in a battery according to an embodiment of this application;
FIG. 8 is a schematic structural diagram of a protection piece in a battery according to an embodiment of this application;
FIG. 9 is a second schematic structural exploded view of a battery according to an embodiment of this application;
FIG. 10 is a schematic structural diagram of a first electrical connecting piece in a battery according to an embodiment of this application;
FIG. 11 is a first cross-sectional schematic structural diagram of a battery according to an embodiment of this application (with a section line indicated by XI-XI in FIG. 6);
FIG. 12 is a second cross-sectional schematic structural diagram of a battery according to an embodiment of this application;
FIG. 13 is a second cross-sectional schematic structural diagram of a battery according to an embodiment of this application;
FIG. 14 is a schematic structural diagram of a second recessed portion in a battery according to an embodiment of this application; and
FIG. 15 is a schematic structural diagram of an electrical device according to an embodiment of this application.

List of reference numerals:
battery 100, 200
electrical device 300
electrode assembly 10
second recessed portion 10a
housing 20
first recessed portion 20a
bottom wall 201
inner wall 202
connecting hole 20b
wall 203
gap 20c
injection port 20d
first sidewall 21
first surface 211
first region 211a
second region 211b
second surface212
third surface 213
second sidewall 22
third sidewall 23
first edge 231
first section 231a
second section 231b
third section 231c
third region 232
fourth sidewall 24
first electrical connecting piece 30
electrode post 31
body portion 311
first abutment portion 312
second abutment portion 313
insulator 32
through-hole 32a
first part 321
second part 322
third part 323
circuit board assembly 40
base board 41
first conductive piece 42
first connecting portion 421
second connecting portion 422
second conductive piece 43
first extension portion 431
second extension portion 432
third extension portion 433
third conductive piece 44
fourth extension portion 441
fifth extension portion 442
bend portion 443
protection piece 50
first tab 61
second tab62
sealing element 63
second electrical connecting piece 70
electrical body 90
first direction X
second direction Z
third direction Y

This application is further described below with reference to the following specific embodiments and the foregoing drawings.

### DETAILED DESCRIPTION OF EMBODIMENTS

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

Understandably, in a technical solution of this application, considering the actual process tolerance, when two components are arranged parallel or perpendicular to each other along the same direction, an angle may exist between the two components. The angle between two components permits a tolerance of 0 to ±10%, and a measured value of the angle between the two components may be greater than, equal to, or less than the desired or nominal value with a tolerance of 0 to ±10%.

An embodiment of this application provides a battery. The battery includes an electrode assembly, a housing, a first electrical connecting piece, and a circuit board assembly. The electrode assembly is accommodated in the housing. The housing includes a first recessed portion that is recessed toward the electrode assembly. The first electrical connecting piece and the first recessed portion are electrically connected to the electrode assembly separately. The circuit board assembly includes a base board, a first conductive piece, a second conductive piece, and a third conductive piece. The base board is disposed in the first recessed portion. The first conductive piece is electrically connected to the base board, and at least a part of the first conductive piece extends beyond the first recessed portion. The second conductive piece is electrically connected between the first conductive piece and the first electrical connecting piece. The third conductive piece is electrically connected between the first conductive piece and the first recessed portion.

In the above battery, the first recessed portion forms a space for accommodating the base board on the outer side of the housing, thereby reducing space occupation caused when the housing and the base board are disposed opposite to each other. Moreover, the base board is connected to the first electrical connecting piece by the first conductive piece and the second conductive piece, thereby reducing the space occupation caused by overlap-connection between the first electrical connecting piece and the base board. Such arrangement reduces the space waste of the battery comprehensively, and increases the energy density of the battery.

The following further describes the embodiments of this application with reference to drawings.

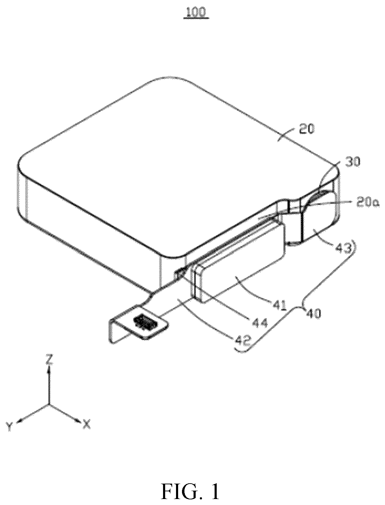

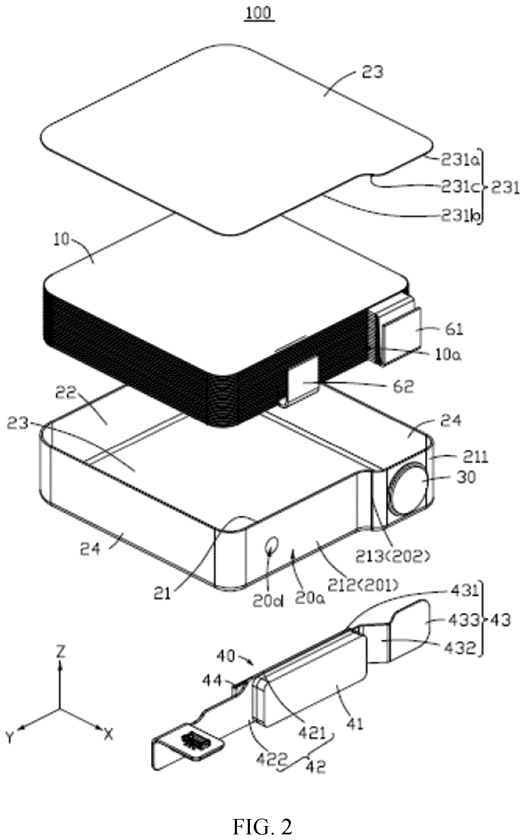

Referring to FIG. 1 and FIG. 2, an embodiment of this application provides a battery 100. The battery 100 includes an electrode assembly 10, a housing 20, a first electrical connecting piece 30, and a circuit board assembly 40. The electrode assembly 10 is accommodated in the housing 20, and is configured to undergo charging and discharging reactions. Optionally, the electrode assembly 10 is formed by stacking or winding a positive electrode plate, a separator, and a negative electrode plate disposed in sequence.

The housing 20 includes a first recessed portion 20a that is recessed toward the electrode assembly 10. A first electrical connecting piece 30 is disposed in a region separate from the first recessed portion 20a on the housing 20. The first electrical connecting piece 30 and the first recessed portion 20a are electrically connected to the electrode assembly 10 separately. The first electrical connecting piece 30 and the first recessed portion 20a are of opposite polarities. Specifically, when the first electrical connecting piece 30 is of a positive polarity, the first recessed portion 20a is of a negative polarity; or, when the first electrical connecting piece 30 is of a negative polarity, the first recessed portion 20a is of a positive polarity.

Preferably, the first electrical connecting piece 30 is of a positive polarity and the first recessed portion 20a is of a negative polarity. The electrode assembly 10 is connected to the first electrical connecting piece 30 and the first recessed portion 20a by a positive connecting piece and a negative connecting piece, respectively. The positive connecting piece may, but is not limited to, be a positive tab. The negative connecting piece may, but is not limited to, be a negative tab.

Because the positive connecting piece is generally made of aluminum, a ceramic layer needs to be applied onto the outer side of the positive connecting piece to reduce the risk of generating burrs. Therefore, the size of the positive connecting piece is larger than the size of the negative connecting piece. Compared to the space between the electrode assembly 10 and the first recessed portion 20a, the space between another region of the electrode assembly 10 and the housing 20 is larger, making it convenient to mount the negative connecting piece between the electrode assembly 10 and the first recessed portion 20a and mount the positive connecting piece between another region of the electrode assembly 10 and the housing 20, and in turn, making it convenient to connect the positive connecting piece to the first electrical connecting piece 30 so that the first electrical connecting piece 30 is endowed with a positive polarity, and to connect the negative connecting piece to the first recessed portion 20a so that the first recessed portion 20a is endowed with a negative polarity.

In some embodiments, the housing 20 is made of a metal material that is electrically conductive and resistant to electrolyte corrosion. By being electrically connected to any position on the housing 20, the electrode assembly 10 can endow the first recessed portion 20a with a positive polarity or negative polarity. Optionally, the metal material may be one of a steel alloy material, an aluminum alloy material, a copper alloy material, a nickel alloy material, or the like.

The circuit board assembly 40 includes a base board 41, a first conductive piece 42, a second conductive piece 43, and a third conductive piece 44. The base board 41 is disposed in the first recessed portion 20a. The first conductive piece 42 is electrically connected to the base board 41, and at least a part of the first conductive piece extends beyond the first recessed portion 20a. Of the first conductive piece 42, the part extending beyond the first recessed portion 20a is configured to be electrically connected to an external device to implement an electrical connection between the base board 41 and the external device. The second conductive piece 43 is electrically connected between the first conductive piece 42 and the first electrical connecting piece 30. The third conductive piece 44 is electrically connected between the first conductive piece 42 and the first recessed portion 20a, so as to electrically connect the base board 41 to the electrode assembly 10. The base board 41 may, but is not limited to, be a battery management system (BMS). Specifically, a plurality of electronic components are disposed on the BMS. The plurality of electronic components can implement functions of modules such as data acquisition, control, protection, communication, power calculation, signal transmission, power transmission, and the like for the electrode assembly 10. The first conductive piece 42 may be, but is not limited to, a flexible printed circuit board. The second conductive piece 43 and the third conductive piece 44 may, but are not limited to, be nickel sheets.

In the above battery 100, the first recessed portion 20a forms a space for accommodating the base board 41 on the outer side of the housing 20, thereby reducing space occupation caused when the housing 20 and the base board 41 are disposed opposite to each other. Moreover, the base board 41 is connected to the first electrical connecting piece 30 by the first conductive piece 42 and the second conductive piece 43, thereby reducing the space occupation caused by overlap-connection between the first electrical connecting piece 30 and the base board 41. Such arrangement reduces the space waste of the battery 100 comprehensively, and increases the energy density of the battery 100.

Still referring to FIG. 2, in some embodiments, the housing 20 includes a first sidewall 21, a second sidewall 22, two third sidewalls 23, and two fourth sidewalls 24. The second sidewall 22 and the first sidewall 21 are disposed opposite to each other along a first direction X. The two third sidewalls 23 are disposed opposite to each other along a second direction Z. The two fourth sidewalls are disposed opposite to each other along a third direction Y. The first sidewall 21, the second sidewall 22, the third sidewall 23, and the fourth sidewall 24 close in to form a space for accommodating the electrode assembly 10. The first direction X, the second direction Z, and the third direction Y are perpendicular to each other.

In some embodiments, along the first direction X, the thickness of the first sidewall 21 and the second sidewall 22 ranges from 0.05 mm to 0.5 mm, thereby reducing the space occupied by the first sidewall 21 and the second sidewall 22 while achieving desired structural strength of the housing 20. Optionally, the thickness of the first sidewall 21 or the second sidewall 22 may be 0.05 mm, 0.075 mm, 0.1 mm, 0.125 mm, 0.15 mm, 0.175 mm, 0.2 mm, 0.25 mm, 0.3 mm, 0.35 mm, 0.4 mm, 0.45 mm, 0.5 mm, or any other value in the range of 0.05 mm to 0.5 mm.

Further, the thickness of the first sidewall 21 ranges from 0.075 mm to 0.2 mm, thereby further reducing the space occupied by the first sidewall 21 and the second sidewall 22 while achieving desired structural strength of the housing 20.

In some embodiments, along the second direction Z, the thickness of each third sidewall 23 ranges from 0.05 mm to 0.5 mm, thereby reducing the space occupied by the third sidewall 23 while achieving desired structural strength of the housing 20. Optionally, the thickness of any one of the third sidewalls 23 may be 0.05 mm, 0.075 mm, 0.1 mm, 0.125 mm, 0.15 mm, 0.175 mm, 0.2 mm, 0.25 mm, 0.3 mm, 0.35 mm, 0.4 mm, 0.45 mm, 0.5 mm, or any other value in the range of 0.05 mm to 0.5 mm.

Further, the thickness of any one of the third sidewalls 23 ranges from 0.075 mm to 0.2 mm, thereby further reducing the space occupied by the third sidewall 23 while achieving desired structural strength of the housing 20.

In some embodiments, along the third direction Y, the thickness of each fourth sidewall 24 ranges from 0.05 mm to 0.5 mm, thereby reducing the space occupied by the fourth sidewall 24 while achieving desired structural strength of the housing 20. Optionally, the thickness of any one of the fourth sidewalls 24 may be 0.05 mm, 0.075 mm, 0.1 mm, 0.125 mm, 0.15 mm, 0.175 mm, 0.2 mm, 0.25 mm, 0.3 mm, 0.35 mm, 0.4 mm, 0.45 mm, 0.5 mm, or any other value in the range of 0.05 mm to 0.5 mm.

Further, the thickness of any one of the fourth sidewalls 24 ranges from 0.075 mm to 0.2 mm, thereby further reducing the space occupied by the third sidewall 23 while achieving desired structural strength of the housing 20.

In some embodiments, the first sidewall 21, the second sidewall 22, the third sidewall 23, and the fourth sidewall 24 are connected to each other by laser welding, thereby increasing the structural strength of the housing 20.

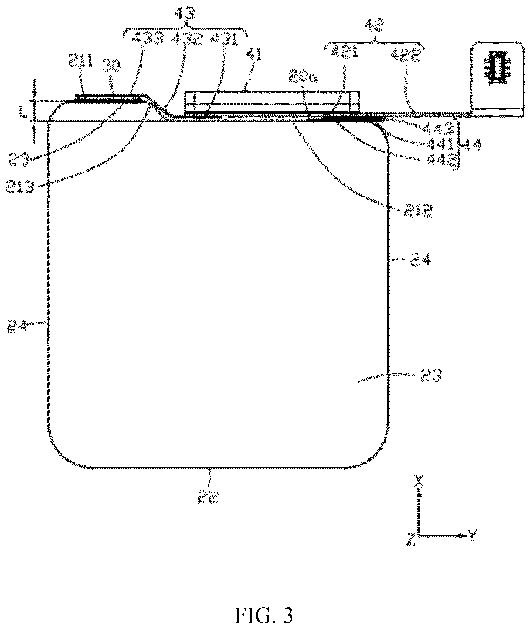

Referring to FIG. 2 and FIG. 3, in some embodiments, the first recessed portion 20a is formed on the first sidewall 21. The first recessed portion 20a includes a bottom wall 201 formed concavely in the first direction X. The side, oriented back from the electrode assembly 10, of the first sidewall 21, includes a first surface 211 and a second surface 212. The first surface 211 is separate from the first recessed portion 20a. The second surface 212 overlaps the bottom wall 201 of the first recessed portion 20a.

The first surface 211 is parallel to the second surface 212, so that the first recessed portion 20a fits the shape of the base board 41, thereby reducing the space occupied by the base board 41, and increasing the energy density of the battery 100. Specifically, the base board 41 generally includes two sidewalls disposed opposite to each other. With the first surface 211 being parallel to the second surface 212, one of the sides of the base board 41 can be disposed opposite to the second surface 212 conveniently, and, in the first direction X, the other side of the base board does not go beyond the plane in which the first surface 211 is located.

In some embodiments, the first electrical connecting piece 30 is connected to the first surface 211, so that the first electrical connecting piece 30 is separate from the base board 41 in the first recessed portion 20a. In addition, both the first surface 211 and the second surface 212 are disposed on the first sidewall 21, thereby reducing the extension length of the second conductive piece 43 extending from the base board 41 to the first electrical connecting piece 30, and in turn, reducing the space occupied by the second conductive piece 43, and increasing the energy density of the battery 100.

Understandably, in some embodiments, the first electrical connecting piece 30 may be further connected to any one of the second sidewall 22, the third sidewall 23, or the fourth sidewall 24, so that the first electrical connecting piece 30 is separate from the base board 41 in the first recess 20a.

In some embodiments, along a direction (that is, the first direction X) perpendicular to the first surface 211, a spacing L between the first surface 211 and the second surface 212 satisfies 0.1 mm ≤ L ≤ 3 mm. In this way, the depth of the first recessed portion 20a in the first direction X fits the shape of the base board 41, thereby reducing the space occupied by the base board 41, and increasing the energy density of the battery 100.

Optionally, the spacing L may be 0.1 mm, 0.5 mm, 0.75 mm, 1 mm, 1.25 mm, 1.5 mm, 2 mm, 2.5 mm, 3 mm, or any other value in the range of 0.05 mm to 3 mm.

Further, the spacing L satisfies 0.5 mm ≤ L ≤ 1.50 mm. In this way, the depth of the first recessed portion 20a in the first direction X fits the shape of the base board 41 to a higher degree, thereby reducing the space occupied by the base board 41, and increasing the energy density of the battery 100.

Still referring to FIG. 2 and FIG. 3, in some embodiments, a side oriented back from the electrode assembly 10, of the first sidewall 21, further includes a third surface 213. The third surface 213 is located between the first surface 211 and the second surface 212.

In some embodiments, the corner between the third surface 213 and the first surface 211 is transitioned smoothly, and/or, the corner between the third surface 213 and the second surface 212 is transitioned smoothly. Such arrangement reduces the risk of scratching the base board 41 or the second conductive piece 43 at the corner, and facilitates manufacture and formation of the first sidewall 21.

In some embodiments, the smooth transition extends in the shape of a curved face or beveled face.

In some embodiments, the third surface 213 is an inner wall 202 of the first recessed portion 20a in the third direction Y. Along the first direction X, a projection of the base board 41 lies within a projection of the second surface 212. Along the third direction Y, the projection of the base board 41 lies within a projection of the third surface 213. In this way, the base board 41 is disposed in the first recessed portion 20a, thereby reducing the space occupied by the base board 41 and increasing the energy density of the battery 100.

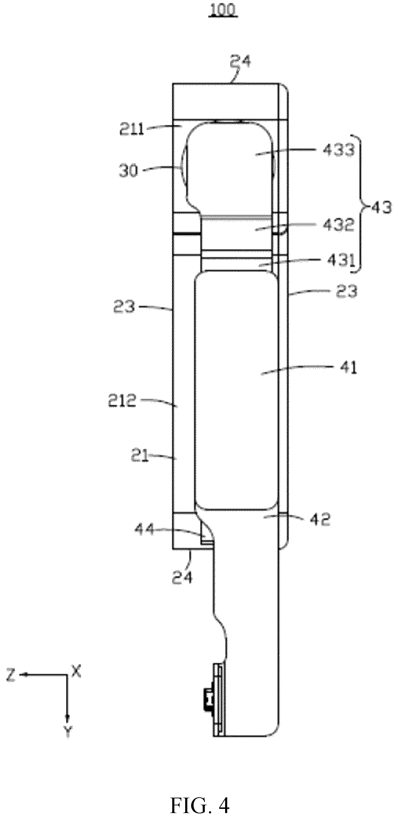

Referring to FIG. 4 together, in some embodiments, the edges of the second surface 212 on the two sides in the second direction Z are connected to the third sidewalls 23 respectively. In other words, the width of the second surface 212 in the second direction Z is equal to the spacing between the two third sidewalls 23 in the second direction Z. In this way, the width of the first recessed portion 20a in the second direction Z is as large as practicable, thereby facilitating accommodation of the base board 41 of a larger size.

Understandably, in some embodiments, the width of the second surface 212 in the second direction Z is less than the spacing between the two third sidewalls 23 in the second direction Z.

In some embodiments, viewed along the first direction X, the first surface 211 and the second surface 212 are arranged sequentially in the third direction Y so that the first sidewall 21 and the first recessed portion 20a form a stepped structure. Correspondingly, the first surface 211 and the second surface 212 are two step surfaces of the stepped structure.

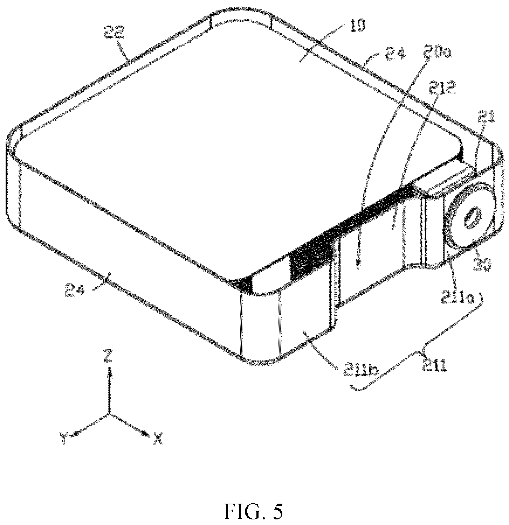

Referring to FIG. 5 together, in some embodiments, viewed along the first direction X, the first surface 211 includes a first region 211a and a second region 211b spaced apart in the third direction Y. The second surface 212 is disposed between the first region 211a and the second region 211b so that the first sidewall 21 and the first recessed portion 20a form a U-shaped concave structure. When the battery 100 is dropped and impacted, the first region 211a and the second region 211b located on two sides of the base board 41 respectively in the third direction Y can be impacted before the base board 41, so as to cushion the impact force on the base board 41 and reduce the risk of directly impacting and damaging the base board 41.

In some embodiments, the first electrical connecting piece 30 is connected to the first region 211a, and the first electrical connecting piece 30 is electrically connected to the electrode assembly 10. The second region 211b is electrically connected to the electrode assembly 10. The first electrical connecting piece 30 and the second region 211b are of opposite polarities. The second conductive piece 43 is electrically connected between the first electrical connecting piece 30 and the first conductive piece 42, and the third conductive piece 44 is electrically connected between the second region 211b and the first conductive piece 42, so as to electrically connect the base board 41 to the electrode assembly 10.

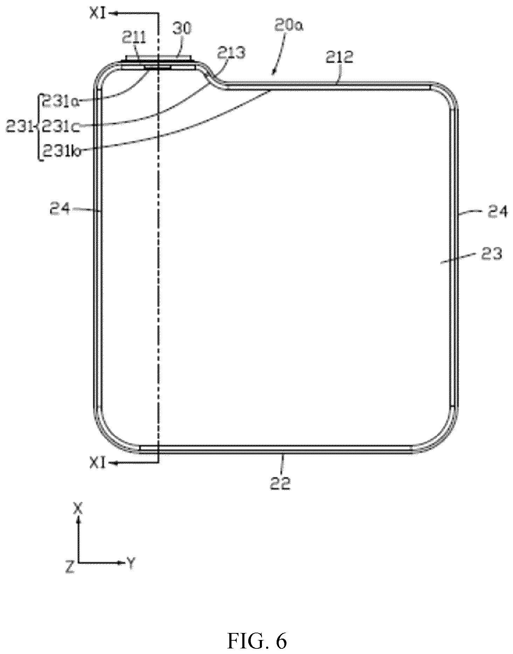

Referring to FIG. 6 together, in some embodiments, viewed along the second direction Z, the third sidewall 23 includes a first edge 231 toward the first sidewall 21. The first edge 231 includes a first section 231a that is flush with the first surface 211, a second section 231b that is flush with the second surface 212, and a third section 231c that overlaps the third surface 213. In this way, the third sidewall 23 forms an opening that communicates with the first recessed portion 20a, thereby making it convenient for the base board 41 to extend into the first recessed portion 20a along the second direction Z, and improving the convenience of mounting.

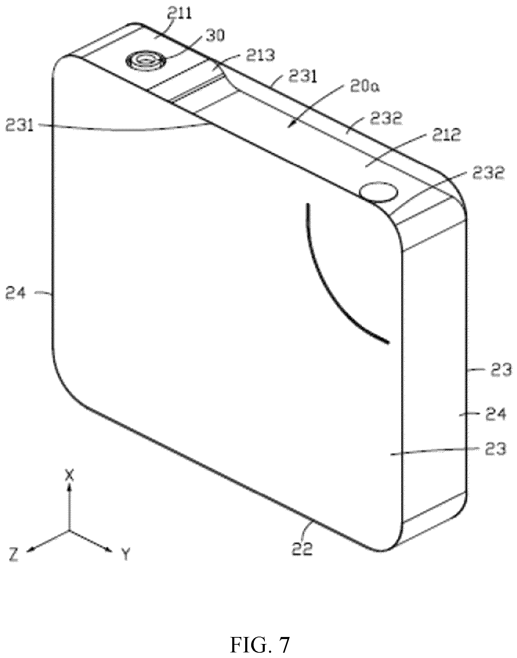

Referring to FIG. 7 together, in some embodiments, the first edge 231 is flush with the first surface 211. The third sidewall 23 includes a third region 232 extending beyond the second surface 212. Along the second direction Z, a projection of the base board 41 lies within the third region 232. When the battery 100 is dropped and impacted, the third regions 232 located on two sides of the base board 41 in the second direction Z can be impacted before the base board 41, so as to cushion the impact force on the base board 41 and reduce the risk of directly impacting and damaging the base board 41.

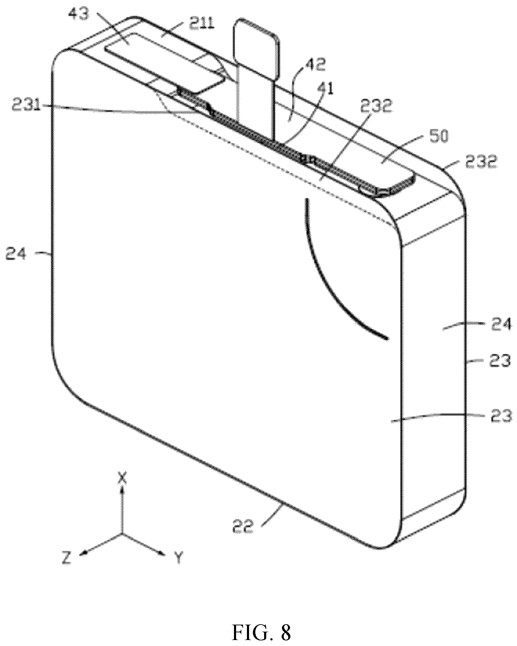

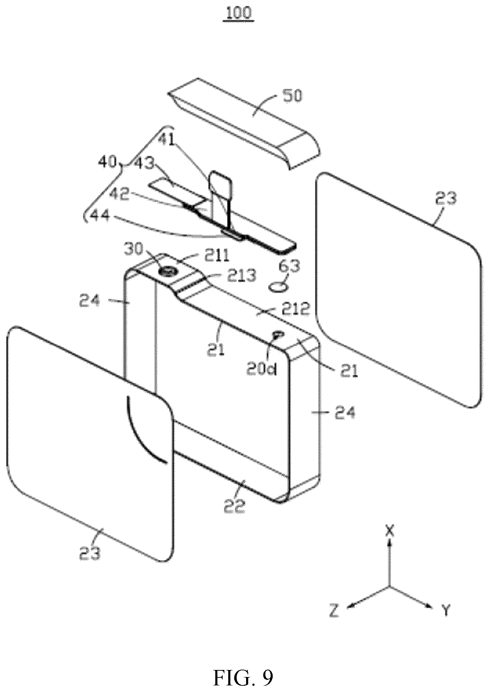

Referring to FIG. 8 and FIG. 9 together, in some embodiments, the battery 100 further includes a protection piece 50. The protection piece 50 overlays the base board 41 and at least a part of the first conductive piece 42 to further protect the base board 41. When the battery 100 is dropped and impacted, the third region 232 and the protection piece 50 can be impacted before the base board 41, so as to cushion the impact force on the base board 41 and reduce the risk of directly impacting and damaging the base board 41.

In some embodiments, the protection piece 50 further overlays at least a part of the second conductive piece 43 and the third conductive piece 44.

In some embodiments, the protection piece 50 is further connected to the third region 232, the second surface 212, and the third surface 213 to increase the strength of connection between the protection piece 50 and the first recessed portion 20a, and reduce the risk of detachment between the protection piece 50 and the first recessed portion 20a in a case of dropping and impacting the battery 100, thereby further protecting the base board 41.

In some embodiments, along the second direction Z, a projection of the protection piece 50 lies within the third region 232. When the battery 100 is dropped and impacted, the third region 232 and the protection piece 50 cushion the impact force on the base board 41 successively, thereby reducing the risk of directly impacting and damaging the base board 41.

Still referring to FIG. 2, in some embodiments, the battery 100 further includes a first tab 61 and a second tab 62. The electrode assembly 10 is formed by stacking or winding a positive electrode plate, a separator, and a negative electrode plate disposed in sequence. The first tab 61 is electrically connected between the positive electrode plate and the first electrical connecting piece 30 to endow the first electrical connecting piece 30 with a positive polarity. The second tab 62 is electrically connected between the negative electrode plate and the first recessed portion 20a to endow the first recessed portion 20a with a negative polarity. The size of the first tab 61 (that is, positive connecting piece) is greater than the size of the second tab 62 (that is, negative connecting piece).

In some embodiments, a side oriented toward the first recessed portion 20a, of the electrode assembly 10, is substantially planar. A side oriented toward the first recessed portion 20a, of the electrode assembly 10, is disposed apart from a side oriented toward the electrode assembly 10, of the first recessed portion 20a. Along the first direction X, the spacing between the electrode assembly 10 and the first electrical connecting piece 30 is greater than the spacing between the electrode assembly 10 and the first recessed portion 20a. In this way, it is convenient to mount a relatively large first tab 61 between the electrode assembly 10 and the first electrical connecting piece 30, and mount a relatively small second tab 62 between the electrode assembly 10 and the first electrical connecting piece 30, thereby increasing the space utilization rate of the housing 20 and the energy density of the battery 100.

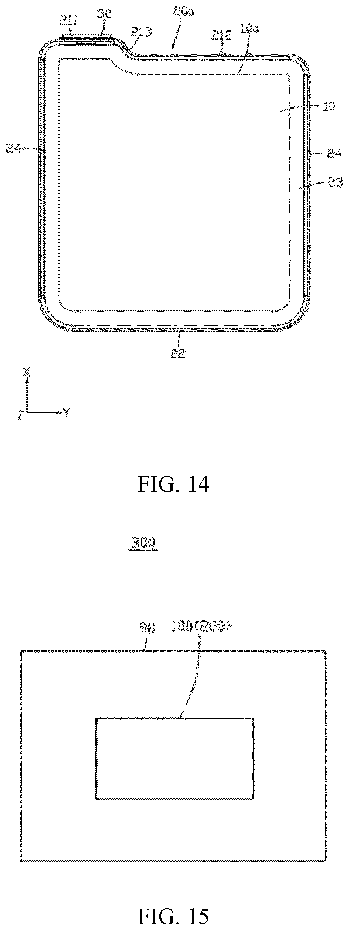

Referring to FIG. 14, in some embodiments, a second recessed portion 10a is created on a side of the electrode assembly 10, the side being oriented toward the first recessed portion 20a. At least a part of the first recessed portion 20a is located in the second recessed portion 10a, so that the electrode assembly 10 fits the space for accommodating the electrode assembly 10 in the housing 20, thereby improving the space utilization rate in the housing 20, and in turn, increasing the energy density of the battery 100.

In some embodiments, notches that communicate with each other are created on a side of the positive electrode plate, a side of the separator, and a side of the negative electrode plate, the sides being all oriented toward the first sidewall 21. In this way, a second recessed portion 10a is formed on a side of the electrode assembly 10, the side being oriented toward the first sidewall 21. The first tab 61 is connected to the electrode assembly 10 on a side oriented toward the first sidewall 21, and is separate from the second recessed portion 10a. In this way, the first tab 61 is contiguous to the first electrical connecting piece 30 in the first direction X, thereby making it convenient to electrically connect the first tab 61 between the positive electrode plate and the first electrical connecting piece 30. The second tab 62 is connected in the second recessed portion 10a so that the second tab 62 is contiguous to the first recessed portion 20a in the first direction X, thereby making it convenient to electrically connect the second tab 62 between the negative electrode plate and the first recessed portion 20a.

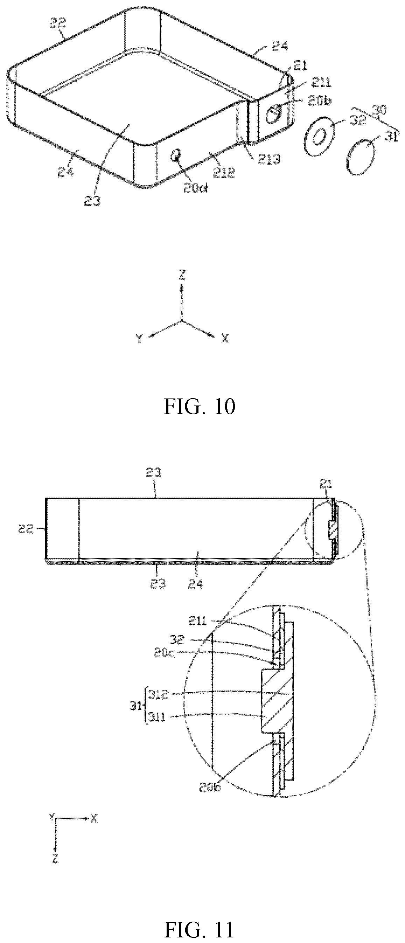

Referring to FIG. 10 and FIG. 11 together, in some embodiments, the first electrical connecting piece 30 includes an electrode post 31 and an insulator 32. The electrode post 31 includes a body portion 311 and a first abutment portion 312 connected to one end of the body portion 311. The body portion 311 is roughly cylindrical. Along an axial direction of the body portion 311, a projection of the body portion 311 lies within a projection of the first abutment portion 312. A connecting hole 20b is created on the housing 20, and the body portion 311 passes through the connecting hole 20b. A gap 20c exists between the wall 203 of the connecting hole 20b and the body portion 311. The gap 20c is configured to insulate the body portion 311 from the housing 20. The insulator 32 is bonded between the housing 20 and the first abutment portion 312. First, the insulator 32 increases the strength of connection between the electrode post 31 and the housing 20 and implements insulation between the first abutment portion 312 and the housing 20. Second, the insulator 32 can seal the connecting hole 20b to reduce the risk of electrolyte leakage in the housing 20. Third, the insulator 32 is bonded between the housing 20 and the first abutment portion 312 to simplify the structure of connection between the electrode post 31 and the housing 20 and reduce the amount of dimension by which the electrode post protrudes beyond the housing 20, thereby increasing the energy density of the battery 100.

In some embodiments, along a direction perpendicular to the axial direction of the body portion 311, when the spacing of the gap 20c is less than 0.1 mm, a part of the insulator 32 also fills the gap 20c to improve the stability of the insulation between the first abutment portion 312 and the housing 20. When the spacing of the gap 20c is greater than or equal to 0.1 mm, the gap 20c does not need to be filled with the insulator 32. In this way, on the basis of achieving desired stability of the insulation between the first abutment portion 312 and the housing 20, the consumed amount of material of the insulator 32 is reduced, and the production cost is reduced.

In some embodiments, a through-hole 32a is created on the insulator 32. The body portion 311 passes through the through-hole 32a and the connecting hole 20b sequentially to allow the insulator 32 to be bonded between the housing 20 and the first abutment portion 312. Along the radial direction of the body portion 311, a projection of the body portion 311 overlaps a projection of the through-hole 32a, or a projection of the body portion 311 lies within a projection of the through-hole 32a.

Still referring to FIG. 11, in some embodiments, the first abutment portion 312 and the insulator 32 are located on a side of the housing 20, the side being oriented back from the electrode assembly 10. The first abutment portion 312 is electrically connected to the second conductive piece 43.

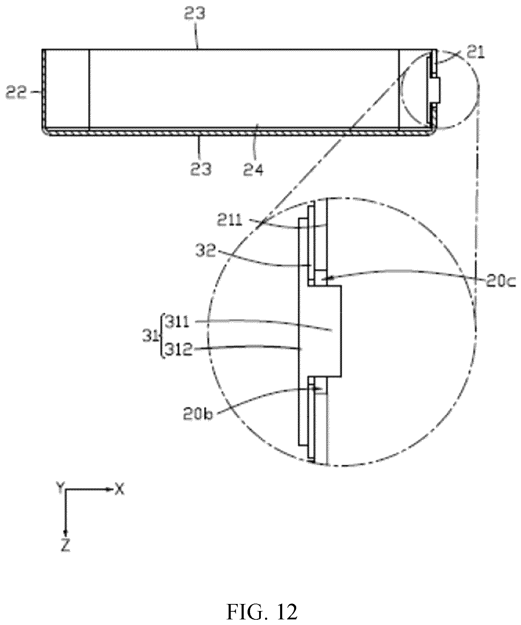

Referring to FIG. 12, in some embodiments, the first abutment portion 312 and the insulator 32 are located on a side of the housing 20, the side being oriented toward the electrode assembly 10. The body portion 311 is electrically connected to the second conductive piece 43.

In some embodiments, along the axial direction of the body portion 311, the length of the body portion 311 ranges from 1 mm to 10 mm, and the thickness of the first abutment portion 312 ranges from 0.1 mm to 2 mm, so as to reduce the space occupied by the electrode post 31 and increase the energy density of the battery 100. Optionally, the length of the body portion 311 may be 1 mm, 2 mm, 2.5 mm, 3 mm, 3.5 mm, 4 mm, 4.5 mm, 5 mm, 6 mm, 7 mm, 8 mm, 9 mm, 10 mm, or any other value in the range of 1 mm to 10 mm. The thickness of the first abutment portion 312 may be 0.1 mm, 0.2 mm, 0.3 mm, 0.4 mm, 0.5 mm, 0.6 mm, 0.9 mm, 1 mm, 1.3 mm, 1.6 mm, 1.9 mm, 2 mm, or any other value in the range of 0.1 mm to 0.5 mm.

Further, the length of the body portion 311 ranges from 2 mm to 5 mm, and the thickness of the first abutment portion 312 ranges from 0.1 mm to 2 mm, so as to further reduce the space occupied by the electrode post 31 and increase the energy density of the battery 100.

Optionally, a cross-section, perpendicular to the axial direction of the body portion 311, of the body portion 311, assumes a shape such as a circle, a square, an arc, an ellipse, a square, a triangle, a polygon, an irregular shape, or the like. A cross-section, perpendicular to the axial direction of the body portion 311, of the first abutment portion 312, assumes a shape such as a circle, a square, an arc, an ellipse, a square, a triangle, a polygon, an irregular shape, or the like.

In some embodiments, along the axial direction of the body portion 311, the thickness of the insulator 32 ranges from 0.05 mm to 1 mm, so as to reduce the space occupied by the insulator 32 and increase the energy density of the battery 100. Optionally, the thickness of the insulator 32 may be 0.05 mm, 0.1 mm, 0.2 mm, 0.3 mm, 0.4 mm, 0.5 mm, 0.6 mm, 0.7 mm, 0.8 mm, 0.9 mm, 1 mm, or any other value in the range of 0.05 mm to 1 mm.

Further, the thickness of the insulator 32 ranges from 0.1 mm to 0.3 mm, so as to further reduce the space occupied by the insulator 32 and increase the energy density of the battery 100.

Optionally, a cross-section, perpendicular to the axial direction of the body portion 311, of the insulator 32, assumes a shape such as a circle, a square, an arc, an ellipse, a square, a triangle, a polygon, an irregular shape, or the like.

Further, the cross-section, perpendicular to the axial direction of the body portion 311, of the insulator 32, is circular, so as to evenly distribute the bonding force between the housing 20 and the first abutment portion 312.

In some embodiments, the insulator 32 is made of an insulating bonding material. Optionally, the bonding material may be one of polypropylene (PP), low density polyethylene (LDPE), high density polyethylene (HDPE), linear low density polyethylene (LLDPE), o-phenylphenol (OPP), polystyrene (PS), polyethylene terephthalate (PET), polyamide (PA), phenol-formaldehyde resin (PF), or the like.

In some embodiments, the electrode post 31, the insulator 32, and the housing 20 are formed as a whole by hot-pressing compounding, so as to increase the strength of connection between the first electrical connecting piece 30 and the housing 20.

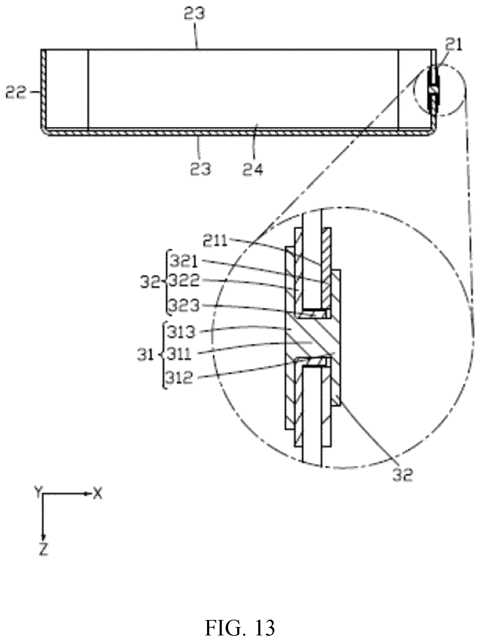

Referring to FIG. 13 together, understandably, in some embodiments, the electrode post 31 further includes a second abutment portion 313. The second abutment portion 313 is connected to an end of the body portion 311, the end being away from the first abutment portion 312. Along the axial direction of the body portion 311, the projection of the body portion 311 lies within a projection of the second abutment portion 313. The first abutment portion 312 and the second abutment portion 313 exert a grip on the two sides of the housing 20, so as to improve the strength of connection between the electrode post 31 and the housing 20. The insulator 32 includes a first part 321, a second part 322, and a third part 323. The first part 321 is bonded between the housing 20 and the first abutment portion 312. The second part 322 is bonded between the housing 20 and the second abutment portion 313. The third part 323 serves as a filler between the body portion 311 and the housing 20, so as to implement insulation between the first abutment portion 312 and the housing 20 and seal the connecting hole 20b, and in turn, reduce the risk of electrolyte leakage in the housing 20.

In some embodiments, the second abutment portion 313 is similar in structure to the first abutment portion 312, and is not described in detail herein.

In some embodiments, the electrode post 31 may be made of a metal material that is electrically conductive and resistant to electrolyte corrosion. Optionally, the metal material may be one of a steel alloy material, an aluminum alloy material, a copper alloy material, a nickel alloy material, or the like.

Still referring to FIG. 2 and FIG. 3, in some embodiments, the first conductive piece 42 includes a first connecting portion 421 and a second connecting portion 422 connected in sequence. The first connecting portion 421 is connected to a side of the base board 41, the side being oriented toward the second surface 212. The first connecting portion is disposed apart from the second surface 212. The second connecting portion 422 extends beyond the first recessed portion 20a from the first connecting portion 421. The second connecting portion 422 is configured to be electrically connected to an external device. The second conductive piece 43 is electrically connected between the first connecting portion 421 and the first electrical connecting piece 30. The third conductive piece 44 is electrically connected between the first connecting portion 421 and the first recessed portion 20a.

In some embodiments, the second conductive piece 43 is sheet-shaped. The second conductive piece 43 includes a first extension portion 431, a second extension portion 432, and a third extension portion 433 connected in sequence. The first extension portion 431 is connected to a side of the first connecting portion 421, the side being oriented toward the second surface 212. The first extension portion is disposed opposite to the second surface 212. The second extension portion 432 extends along a direction that fits the third surface 213. The third extension portion 433 is connected to the first electrical connecting piece 30 on a side away from the first surface 211, and is disposed opposite to the first surface 211, so as to separate and insulate the second conductive piece 43 from the housing 20, reduce the space occupied by the second conductive piece 43, and increase the energy density of the battery 100.

In some embodiments, the third conductive piece 44 is sheet-shaped. The third conductive piece 44 includes a fourth extension portion 441 and a fifth extension portion 442 spaced apart, and a bend portion 443 disposed between the fourth extension portion 441 and the fifth extension portion 442. A side, oriented back from the fifth extension portion 442, of the fourth extension portion 441, is connected to the second surface 212. A side, oriented back from the fourth extension portion 441, of the fifth extension portion 442, is connected to the first connecting portion 421, so as to stably support and connect the first connecting portion 421 and the base board 41, and improve the stability of the connection between the second surface 212 and the first connecting portion 421.

Still referring to FIG. 8 and FIG. 9, understandably, in some embodiments, the first connecting portion 421 is connected to a side of the base board 41, the side being oriented back from the second surface 212. In the first direction X, the first connecting portion does not extend beyond the plane in which the first surface 211 is located. The second connecting portion 422 extends beyond the first recessed portion 20a from the first connecting portion 421. The second conductive piece 43 is electrically connected between the first connecting portion 421 and the first electrical connecting piece 30. The third conductive piece 44 is electrically connected between the first connecting portion 421 and the first recessed portion 20a.

In some embodiments, an injection port 20d is created on the housing 20 to facilitate injection of an electrolyte solution into the housing 20. The battery 100 further includes a sealing element 63 (referring to FIG. 9). The sealing element 63 is configured to seal the injection port 20d, so as to reduce the risk of electrolyte leakage. The injection port 20d is created in the first recessed portion 20a so that the sealing element 63 is disposed in the first recessed portion 20a, thereby reducing the space occupied by the sealing element 63, and increasing the energy density of the battery 100.

Understandably, in some embodiments, the first recessed portion 20a may be formed on any one of the second sidewall 22, the third sidewall 23, or the fourth sidewall 24. In terms of structure and connection relationship, the first recessed portion 20a formed on any one of the second sidewall 22, the third sidewall 23, or the fourth sidewall 24 is similar to the first recessed portion 20a formed on the first sidewall 21, and is not described in detail herein.

An embodiment of this application further provides a battery 200. The battery 200 includes an electrode assembly 10, a housing 20, a first electrical connecting piece 30, a second electrical connecting piece (not shown in the drawing), and a circuit board assembly 40. The electrode assembly 10 is accommodated in the housing 20, and is configured to undergo charging and discharging reactions. The housing 20 includes a first recessed portion 20a that is recessed toward the electrode assembly 10. A first electrical connecting piece 30 is disposed in a region separate from the first recessed portion 20a on the housing 20. The second electrical connecting piece is disposed in the first recessed portion 20a. The first electrical connecting piece 30 and the second electrical connecting piece are electrically connected to the electrode assembly 10 separately. The first electrical connecting piece 30 and the second electrical connecting piece are of opposite polarities. The circuit board assembly 40 includes a base board 41, a first conductive piece 42, a second conductive piece 43, and a third conductive piece 44. The base board 41 is disposed in the first recessed portion 20a. The first conductive piece 42 is electrically connected to the base board 41, and at least a part of the first conductive piece extends beyond the first recessed portion 20a. Of the first conductive piece 42, the part extending beyond the first recessed portion 20a is configured to be electrically connected to an external device to implement an electrical connection between the base board 41 and the external device. The second conductive piece 43 is electrically connected between the first conductive piece 42 and the first electrical connecting piece 30. The third conductive piece 44 is electrically connected between the first conductive piece 42 and the second electrical connecting piece, so as to electrically connect the base board 41 to the electrode assembly 10.

In some embodiments, the second electrical connecting piece is disposed in a region separate from the first recessed portion 20a on the housing 20.

In some embodiments, the second electrical connecting piece is similar in structure to the first electrical connecting piece 30, and is not described in detail herein.

In the above battery 200, the first recessed portion 20a forms a space for accommodating the base board 41 on the outer side of the housing 20, thereby reducing space occupation caused when the housing 20 and the base board 41 are disposed opposite to each other. The second electrical connecting piece is connected in the first recessed portion 20a to reduce the space occupied by the second electrical connecting piece. The base board 41 is connected to the first electrical connecting piece 30 by the first conductive piece 42 and the second conductive piece 43, thereby reducing the space occupation caused by overlap-connection between the first electrical connecting piece 30 and the base board 41. The base board 41 is connected to the second electrical connecting piece by the first conductive piece 42 and the third conductive piece 44, thereby reducing the space occupation caused by overlap-connection between the second electrical connecting piece and the base board 41. Such arrangement reduces the space waste of the battery 200 comprehensively, and increases the energy density of the battery 200.

Referring to FIG. 15, an embodiment of this application further provides an electrical device 300. The electrical device 300 includes an electrical body 90 and the battery 100 or battery 200 in any one of the embodiments described above. The battery 100 or battery 200 is electrically connected to the electrical body 90. The electrical device 300 may be an electronic device such as a mobile phone or tablet computer, or may be a mobile device such as an unmanned aerial vehicle or electric vehicle.

In the above battery 100, the first recessed portion 20a forms a space for accommodating the base board 41 on the outer side of the housing 20, thereby reducing space occupation caused when the housing 20 and the base board 41 are disposed opposite to each other. Moreover, the base board 41 is connected to the first electrical connecting piece 30 by the first conductive piece 42 and the second conductive piece 43, thereby reducing the space occupation caused by overlap-connection between the first electrical connecting piece 30 and the base board 41. Such arrangement reduces the space waste of the battery 100 comprehensively, and increases the energy density of the battery 100.

In addition, a person skilled in the art may make other variations to this application without departing from the essence of this application. The variations made based on the essence of this application still fall within the protection scope of this application.

## Claims

1. A battery, **characterized in that** the battery comprises an electrode assembly, a housing, a first electrical connecting piece, and a circuit board assembly, and the electrode assembly is accommodated in the housing;
the housing comprises a first recessed portion that is recessed toward the electrode assembly, and the first electrical connecting piece and the first recessed portion are electrically connected to the electrode assembly separately; and
the circuit board assembly comprises a base board, a first conductive piece, a second conductive piece, and a third conductive piece; the base board is disposed in the first recessed portion; the first conductive piece is electrically connected to a surface of the base board, the surface being oriented toward the housing; at least a part of the first conductive piece extends beyond the first recessed portion, and is configured to be electrically connected to an external device; the second conductive piece is electrically connected to the first conductive piece and the first electrical connecting piece; and the third conductive piece is electrically connected to the first conductive piece and the first recessed portion.

2. The battery according to claim 1, **characterized in that** the housing comprises a first sidewall, and the first recessed portion is formed on the first sidewall; a side oriented back from the electrode assembly, of the first sidewall, comprises a first surface and a second surface; the second surface coincides with a bottom wall of the first recessed portion; the first surface is parallel to the second surface; and the first electrical connecting piece is connected to the first surface.

3. The battery according to claim 2, **characterized in that**, along a direction perpendicular to the first surface, a spacing L between the first surface and the second surface satisfies 0.1 mm ≤ L ≤ 3 mm.

4. The battery according to claim 3, **characterized in that** the spacing L satisfies 0.5 mm ≤ L ≤ 1.5 mm.

5. The battery according to claim 2, **characterized in that** the side oriented back from the electrode assembly, of the first sidewall, further comprises a third surface, the third surface is disposed between the first surface and the second surface, a corner between the third surface and the first surface is transitioned smoothly, and/or, a corner between the third surface and the second surface is transitioned smoothly.

6. The battery according to claim 5, **characterized in that** the first conductive piece comprises a first connecting portion and a second connecting portion connected in sequence; the first connecting portion is connected to a side of the base board, the side being oriented toward the second surface, and the first connecting portion is disposed apart from the second surface; the second connecting portion extends beyond the first recessed portion from the first connecting portion; the second conductive piece comprises a first extension portion, a second extension portion, and a third extension portion connected in sequence; the first extension portion is connected to a side of the first connecting portion, the side being oriented toward the second surface, and the first extension portion is disposed opposite to the second surface; the second extension portion extends along a direction that fits the third surface; the third extension portion is disposed opposite to the first surface and electrically connected to the first electrical connecting piece; and the third conductive piece is connected between the first connecting portion and the second surface.

7. The battery according to claim 5, **characterized in that** the housing further comprises a second sidewall; the second sidewall and the first sidewall are disposed opposite to each other along a first direction; the housing further comprises two third sidewalls disposed opposite to each other along a second direction and two fourth sidewalls disposed opposite to each other along a third direction; the first sidewall, the second sidewall, the third sidewall, and the fourth sidewall close in to form a space for accommodating the electrode assembly; the first direction, the second direction, and the third direction are perpendicular to each other.

8. The battery according to claim 7, **characterized in that**, along the first direction, a projection of the base board lies within a projection of the second surface; and, along the third direction, the projection of the base board lies within a projection of the third surface.

9. The battery according to claim 7, **characterized in that**, viewed along the first direction, the first surface and the second surface are arranged sequentially in the third direction.

10. The battery according to claim 7, **characterized in that**, viewed along the first direction, the first surface comprises a first region and a second region spaced apart in the third direction, and the second surface is disposed between the first region and the second region.

11. The battery according to claim 7, **characterized in that**, viewed along the second direction, the third sidewall comprises a first edge toward the first sidewall; the first edge is flush with the first surface; the third sidewall comprises a third region protruding beyond the second surface; and, along the second direction, a projection of the base board lies within the third region.

12. The battery according to claim 11, **characterized in that** the battery further comprises a protection piece, the protection piece overlays the base board and at least a part of the first conductive piece, and the protection piece is further connected to the third region, the second surface, and the third surface.

13. The battery according to claim 1, **characterized in that** the first electrical connecting piece comprises an electrode post and an insulator; the electrode post comprises a body portion and a first abutment portion connected to one end of the body portion; along an axial direction of the body portion, a projection of the body portion lies within a projection of the first abutment portion; a connecting hole is created on the housing; the body portion passes through the connecting hole; a gap exists between a wall of the connecting hole and the body portion; and the insulator is bonded between the housing and the first abutment portion.

14. The battery according to claim 13, **characterized in that** the first abutment portion and the insulator are located on a side of the housing, the side being oriented back from the electrode assembly; or, the first abutment portion and the insulator are located on a side of the housing, the side being oriented toward the electrode assembly.

15. The battery according to claim 13, **characterized in that** the electrode post further comprises a second abutment portion; the second abutment portion is connected to an end of the body portion, the end being away from the first abutment portion; along an axial direction of the body portion, a projection of the body portion lies within a projection of the second abutment portion; the insulator comprises a first part, a second part, and a third part; the first part is bonded between the housing and the first abutment portion; the second part is bonded between the housing and the second abutment portion; and the third part serves as a filler between the body portion and the housing.

16. The battery according to claim 1, **characterized in that** a side oriented toward the first recessed portion, of the electrode assembly, is a flat face; and the side oriented toward the first recessed portion, of the electrode assembly, is disposed apart from a side oriented toward the electrode assembly, of the first recessed portion.

17. The battery according to claim 1, **characterized in that** the electrode assembly is formed by stacking or winding a positive electrode plate, a separator, and a negative electrode plate disposed in sequence.

18. A battery, **characterized in that** the battery comprises an electrode assembly, a housing, a first electrical connecting piece, a second electrical connecting piece, and a circuit board assembly, and the electrode assembly is accommodated in the housing;
the housing comprises a first recessed portion that is recessed toward the electrode assembly, and the first electrical connecting piece and the second electrical connecting piece are electrically connected to the electrode assembly separately; and
the circuit board assembly comprises a base board, a first conductive piece, a second conductive piece, and a third conductive piece; the base board is disposed in the first recessed portion; the first conductive piece is electrically connected to a surface of the base board, the surface being oriented toward the housing; at least a part of the first conductive piece extends beyond the first recessed portion, and is configured to be electrically connected to an external device; the second conductive piece is electrically connected to the first conductive piece and the first electrical connecting piece; and the third conductive piece is electrically connected between the first conductive piece and the second electrical connecting piece.

19. An electrical device, comprising an electrical body, **characterized in that** the electrical device further comprises the battery according to any one of claims 1 to 17 or claim 18, and the battery is electrically connected to the electrical body.
